**Europäisches Patentamt**

**European Patent Office**

**Office européen des brevets**

(19)

(11) Publication number: **0 255 559**
**A1**

(12)

# EUROPEAN PATENT APPLICATION

(21) Application number: **86116455.6**

(22) Date of filing: **27.11.86**

(51) Int. Cl.4: **A01F 15/00**

(30) Priority: **04.08.86 US 892996**

(43) Date of publication of application:
**10.02.88 Bulletin 88/06**

(84) Designated Contracting States:
**DE FR GB IT**

(71) Applicant: **Hesston Corporation
P.O. Box 788 420 Lincoln Boulevard
Hesston Kansas 67062(US)**

(72) Inventor: **Fell, Ferrol S.
609 Normandy
Newton Kansas 67114(US)**
Inventor: **Anderson, J. Dale
Box 261
Canton Kansas 67428(US)**
Inventor: **Ratzlaff, Howard J.
Route 1 Box 127
Hesston Kansas 67062(US)**
Inventor: **Garrison, Harold Keith
714 Santa Fe
Newton Kansas 67114(US)**

(74) Representative: **UEXKÜLL & STOLBERG
Patentanwälte
Beselerstrasse 4
D-2000 Hamburg 52(DE)**

(54) **Continuous round baler and method.**

(57) The baler (10) has a "vertical" bale starting chamber in which the upwardly moving rear belts (26) and the downwardly moving front belts (24) cooperate to tumble and roll incoming material into a bale. When the bale reaches full size in the expanded chamber (88), the bale is lifted to a wrapping station where it continues to spin as a binding wrapper is applied. During the lifting of the finished bale and subsequent application of the wrapper, fresh material entering the continuously moving baler is confined beneath the finished bale in a new starting chamber, whereupon the cycle is repeated. As the new bale grows, a discharge ramp becomes formed by certain stretches of the belts and rollers (50a, 50b) to gravitationally discharge the wrapped bale from the baler without stopping advancement of the machine.

Fig.1.

# CONTINUOUS ROUND BALER AND METHOD

## Technical Field

This invention generally relates to crop harvesting techniques and, more particularly, concerns a baler and method for making large round bales of crop material on a continuous basis, i.e., by continuing to move the baler forwardly across the field picking up and forming crop material into a new bale as a completed bale is being wrapped with twine and discharged onto the field.

## Background

Large round bales have become an exceedingly popular package in which to store a variety of crop materials, ranging from alfalfa to corn stalks. The large cylindrical configuration and generally uniform density of the bales enhance their weathering characteristics, allowing the bales to remain in the field until needed. Additionally, the bales concentrate large quantities of crop material in individual packages, reducing the time required to gather and transport a given amount of crop material when needed. Further, other than a tractor operator, no manual labor is required to gather and transport the bales from the field. In sum, the benefits of large round bales are consistent with the continuing trend toward highly mechanized agricultural operations.

Conventional large round balers require discharge of a completed bale before formation of a new bale is started. Such requirement consumes a significant amount of the total baling time.

Several proposed designs exist in the prior art of round balers which appear to be capable of continuous operation. See, for example, U.S. Patents 4,035,999 and 4,499,714. However, neither of these proposed designs has achieved commercial acceptance. Apparently, the projected increases in productivity expected to be gained using balers of these designs were outweighed by the complexity, costs, and other unresolved problems associated therewith.

## Summary of the Present Invention

The present invention provides a large round baler and baling method designed to achieve the heretofore elusive goal of continuous baling operation. Furthermore, the present invention is intended to capitalize on the heretofore highly successful "vertical chamber" round baling concepts pioneered in U.S. Patents 4,321,787; 4,386,493; and 4,182,101 by providing a way of utilizing such vertical chamber concepts in a continuous round baler.

Pursuant to these objectives, the present invention contemplates a continuous baler which, preferably, starts each bale in a "vertical chamber" of the type illustrated in the '787, '493 and '101 patents. The bale forming proceeds in the usual way until the bale reaches full size, whereupon it is lifted into a raised position as fresh material continues to enter the baler beneath the rising bale. As the finished bale rises, a new vertical starting chamber is created beneath the rising bale to capture the incoming materials and to commence forming the next bale. If desired, after the upper bale has been raised sufficiently to allow formation of the new starting chamber therebeneath, the upper bale may remain in the baler and continue turning while a suitable wrapping material such as binding twine is coiled about the bale.

As the new bale grows in the lower portion of the baler, it continues to progressively push the upper bale higher and higher in the baler and to cause the upper bale to be released from the control of forming belts which have previously been used to compact the bale and drivingly rotate the same during its formation and tying cycles. Ultimately, the bale growing in the lower portion of the baler increases to such a size that the upper bale is presented to a rearwardly inclined ramp formed by adjacent belt and roller portions of the baler such that the bale simply discharges from the baler by gravity down such effective ramp.

These and other advantages and attainments of the present invention will become apparent to those skilled in the art upon a reading of the following detailed description when taken in conjunction with the drawings wherein there is shown and described an illustrative embodiment of the invention.

## Brief Description of the Drawings

Fig. 1 is a left side elevational view of a large round baler constructed in accordance with the principles of the present invention with the near sidewall of the baler removed to reveal internal details;

Fig. 2 is a left side elevatonal view, on a smaller scale than that of Fig. 1, of the baler;

Fig. 3 is a right side elevational view, on the same scale as Fig. 2, of the baler;

Fig. 4 is a rear elevational view of the baler;

Fig. 5 is an enlarged fragmentary view, partly in section, taken generally along line 5-5 in Fig. 1 and illustrating the manner in which rollers of the baler are attached to drivable positioning chains behind cover panels on opposite sides of the baler;

Fig. 6 is an enlarged fragmentary view of the means by which the guide rollers are connected to their positioning chains;

Fig. 7 is an enlarged end view of the hydraulic motor utilized to actuate the roller positioning chains and showing a ratchet gear and dog arrangement associated therewith for preventing the motor from driving the positioning chains in reverse;

Figs. 8 and 9 are schematic views of the hydraulic circuit and components for controlling operation of the positioning chains and bale-forming belt tension, showing the circuit and components in a chain retarding mode in Fig. 8 and in a bale lifting mode in Figs. 9;

Figs. 10 and 16 are schematic views of the baler showing th sequence of steps it performs in making and discharging bales on a continuous basis;

Fig. 17 is a fragmentary elevational view of the left side of the baler with the ground wheel removed to reveal details of a control for a fork assembly as depicted in Figs. 18-21; and

Figs. 18-21 are fragmentary elevational views of the left side of the baler with the near sidewall removed to show details of a fork assembly which may be added to the baler to aid in separating incoming crop materials from a finished bale as it is raised to the wrapping station in the baler.

## Detailed Description

In the following description, right hand and left hand references are determined by standing at the rear of the baler and facing in the direction of forward travel.

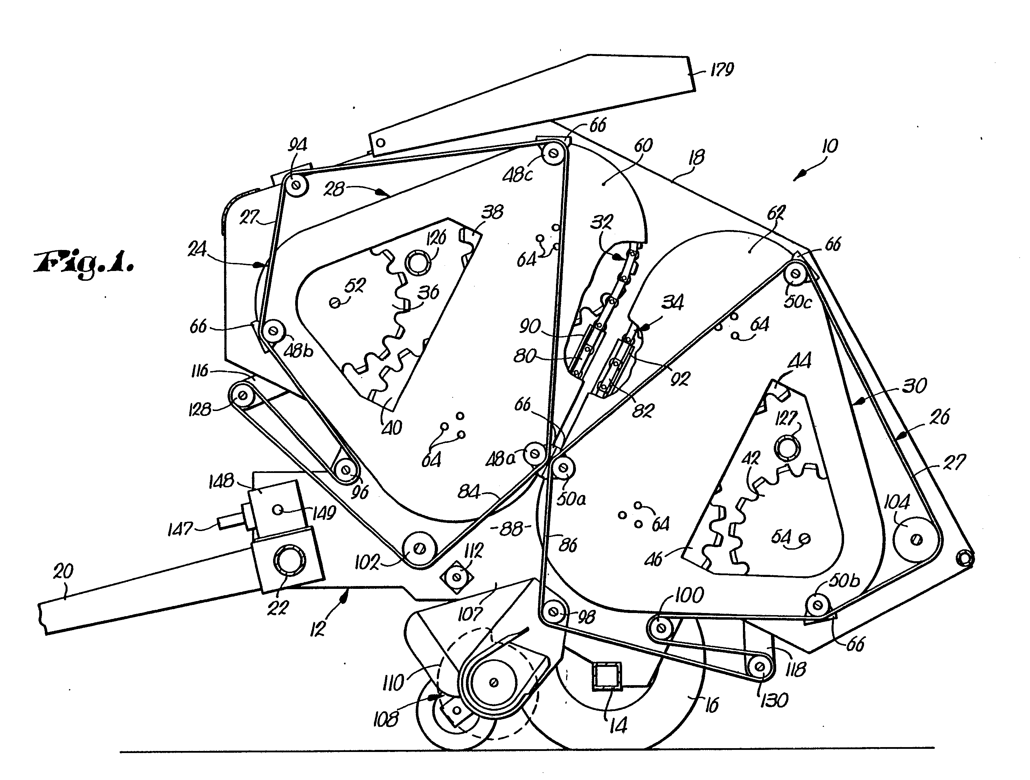

Referring now to the drawings, and particularly to Figs. 1 to 4, there is shown a continuous round baler generally designaged by the numeral 10 and comprising a preferred embodiment of the present invention. The baler 10 is "continuous" in the sense that it can be constantly moved across the field on a non-stop basis without pausing during ejectin of a completed bale.

The baler 10 has a mobile frame 12 that includes a transverse axle 14 supported by a pair of laterally spaced apart ground wheels 16. A pair of spaced apart upright sidewalls 18 are mounted on frame 12, and a centrally located tongue 20 extends forwardly from a cross beam 22 of frame 12 to adapt the baler 10 for connection to a towing tractor.

For forming large round bales on a continuous basis, the baler 10 has mirror-imaged front and rear sets 24 and 26 of endless flexible bale rolling members, preferably in the form of identical, side-by-side positioned endless flexible belts 27 between sidewalls 18. Also, the baler 10 has mirror-imaged front and rear control mechanisms 28 and 30 which function to engage the belt sets 24, 26 and periodically reshape their respective closed loop configurations according to different, successive stages of operation in the baling process.

More particularly, the control mechanisms 28 and 30 include on the interior of each sidewall 18 front and rear endless flexible chains 32 and 34 arranged in triangular patterns on and around corresponding sets of three triangularly-arranged, rotatable sprockets 36-40 and 42-46.

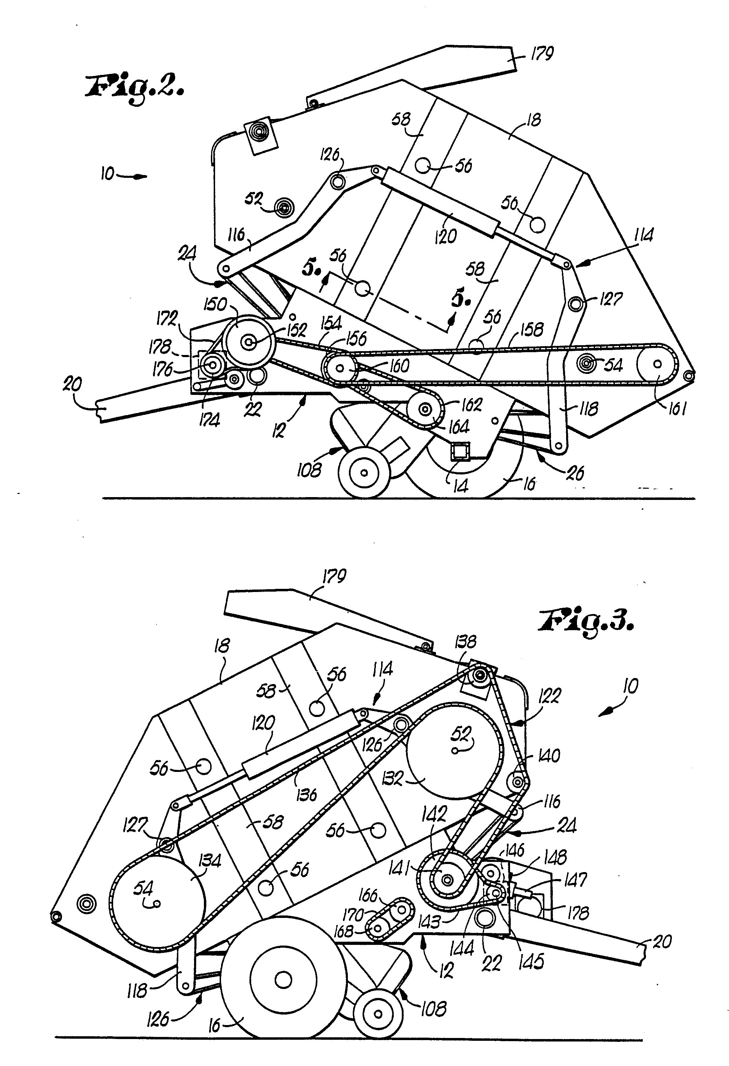

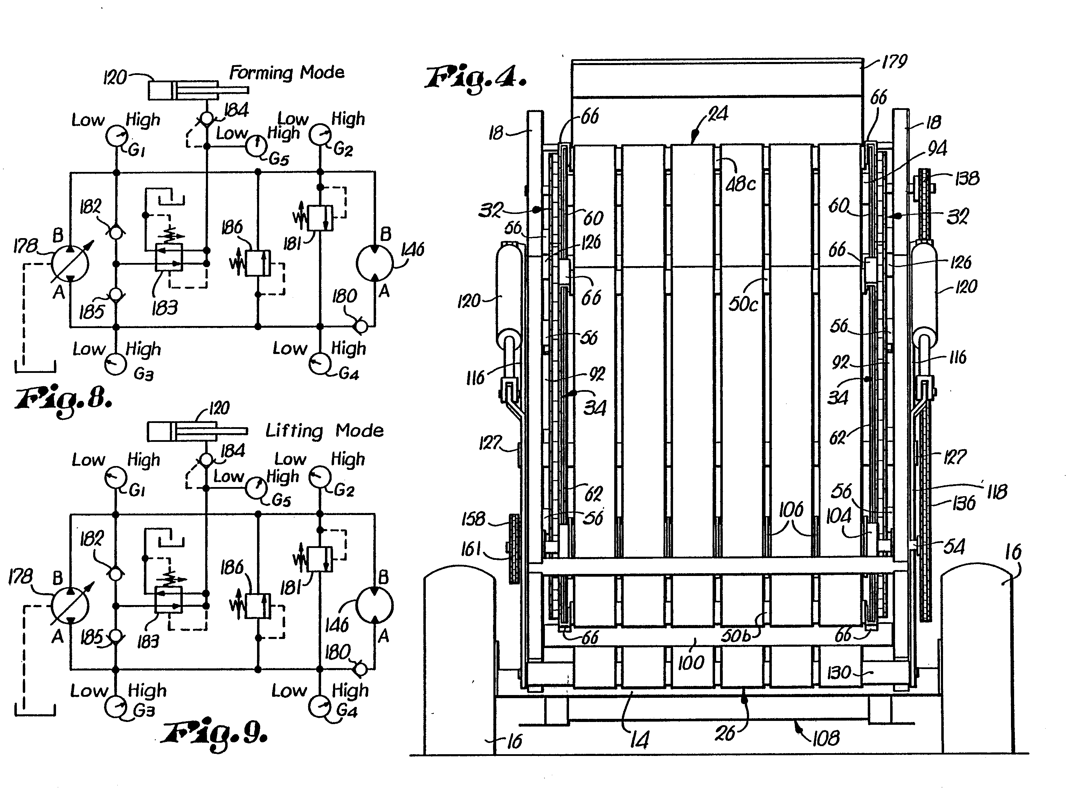

Further, the front mechanism 28 includes three spaced positioning rollers which span the baler to interconnect the two front chains 32, and the rear mechanism 30 includes three spaced positioning or rollers 50 which span the baler to interconnect the two rear chains 34. The two front sprockets on opposite sides of the baler are secured to a common drive shaft 52 that spans the baler, while the two rearmost sprockets 42 on opposite sides of the baler are secured to a common drive shaft 54 that spans the sidewalls 15 at that location. On the other hand, the remaining sprockets 38, 40, 44, and 46 are each carried by respective idler stub shafts 56 on opposite sides of the baler as seen in Figs. 2 and 3.

A pair of front and rear triangular shields 60 and 62 on each sidewall 18 cover the sprockets 36-40 and 42-46 so as to prevent crop material from contacting the sprockets and accumulating thereon. The shields 60 and 62 are mounted in stationary positions, being connected at 64 to the inner ends of the stub shafts 56.

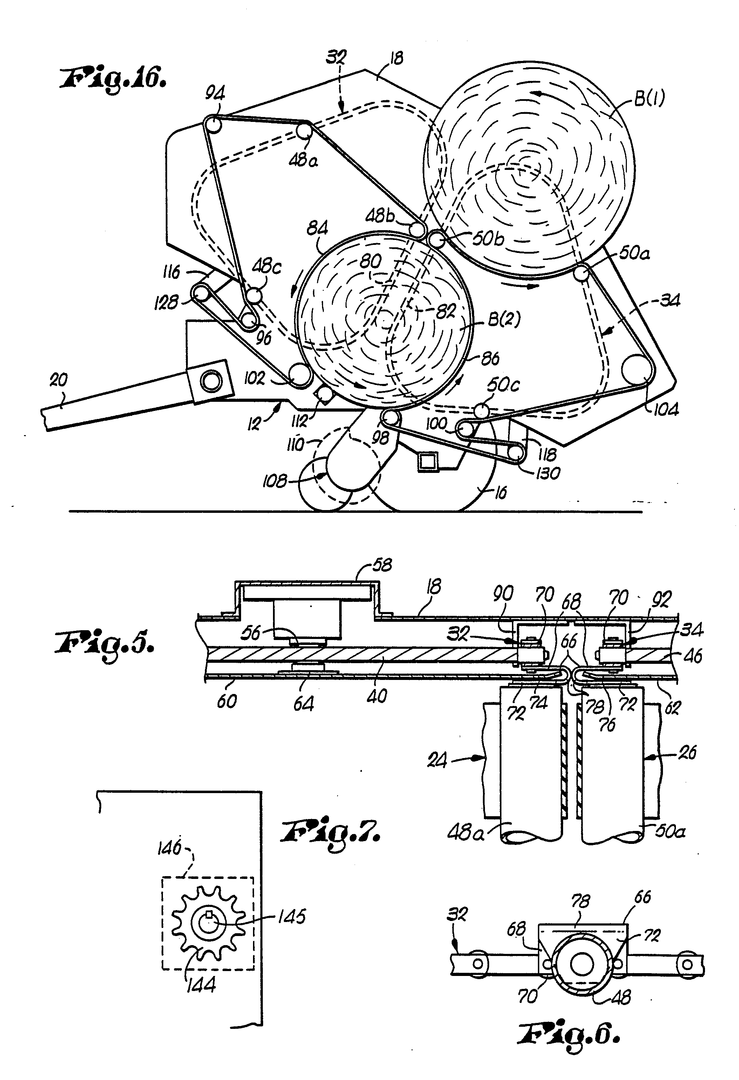

As seen in Figs. 4-6, the guide rollers 48 and 50 are attached at their opposite ends by generally U-shaped connectors 66 to the positioning chains 32 and 34. Each connector 66 has an outer leg portion 68 attached to one link 70 of the corresponding chain 32 or 34 and an inner leg portion 72 attached to the end of its roller. Peripheral edge margins 74 and 76 of the respective shields 60 and 62 project into the bight portions 78 of connectors 66.

Among other things, the control rollers 48, 50 cooperate with the front and rear belt sets 24, 26 to define successively formed baling chambers throughout operation of the baler. In this respect each of the front rollers 48 is matched or paired up with a corresponding rear roller 50 so as to be at corresponding positions in their respective paths of travel at all times in the baling operation. The matched pairs of rollers are identified by the same letter, for instance "a", "b", or "c", after their respective reference numerals in Fig. 1. As the rollers move in their respective triangular paths of travel, they periodically come together in their matched pairs and move in an upward course to travel along the parallel generally upright and upwardly moving stretches 80 and 82 of the chains 32, 34. When in the position of rollers 48a, 50a, they bring front and rear stretches 84 and 86 of the belts 24 and 26 together into an upright, triangularly-shaped starting configuration of a bale forming chamber, generally identified as 88 in Fig. 1 with the rollers 48a, 50a specifically forming a closed lid or top of the chamber 88. Since the matched pairs of rollers, 48a, 50a, 48b, 50b, and 48c, 50c are displaced from one another a distance which is greater than the length of the vertical stretches 80, 82 of chains 32, 34, only one forming chamber 88 with a closed lid or top can be formed at one time. Front and rear guide bars 90 and 92 on each of the sidewalls 18 help maintain the chain stretches 80 and 82 in their parallel relationship.

Referring still to Fig. 1, it will be seen that the front and rear sets of belts 24 and 26 are also entranied about respective front and rear pairs of rotatable idler rollers 94, 96 and 98, 100 spanning the sidewalls 18. Further, the belts 24 and 26 are respectively looped around front and rear oppositely rotating drive rollers 102 and 104. As seen illustrated in Fig. 4 with respect to rear drive roller 104, both drive rollers 102, 104 are provided with axially-displaced and circumferentially-extending, plate-like spacers 106 secured thereto which maintain the desired spacing between the side-by-side arranged belts. Also as shown in Fig. 1, it is the front drive roller 102 and the rear idler roller 98 which together hold the sets of belts 24 and 26 in spaced relationship to one another at a lower region of the sidewalls 18 so as to assist the roller pair 48a, 50a in defining the triangular starting configuration of the baler rolling chambr 88 and in maintaining an open entry throat 107 for each successive forming chamber 88.

A crop material pickup 108 is mounted transversely across the frame 12 between its sidewalls 18 and below the open throat 107. The pickup 108 has a plurality of crop material gathering tines (not shown) which move in the rotational path represented by the dashed line 110 in Fig. 1 for delivering crop material from the field up through the throat 107 and chamber 88 as the baler moves across the field. Also, above the pickup 108 and located nearer to the front drive roller 102 than to the rear idler roller 98, a powered roller 112 extends transversely across the open bottom of the chamber 88 at the upper, forward extremity of throat 107 and is rotatably mounted to the opposite sidewalls 18. The clockwise-rotating roller 112 (viewing Fig. 1) cooperates with the triangularly-configured stretches 84 and 86 of the respective belts 24 and 26 to roll crop material received in the chamber 88 in a counterclockwise direction (viewing Fig. 1) in forming a round bale therein.

Formation of a round bale of desired density in the bale rolling chamber 88 is accomplished by applying a desired level of pressure on the crop material as it is rolled by the belts 24, 26, while, at the same time, allowing the chamber to grow in size to accommodate growth in the size of the bale. In this respect, a tensioning mechanism, generally designated 114 (Figs. 2 and 3), is provided on the baler 10 for tensioning the front and rear sets of belts 24 and 26.

More particularly, as seen in Figs. 1-4, the tensioning mechanism 114 includes front and rear take-up arms 116 and 118 on each sidewall 18 and a pair of hydraulic actuators 120 therefor. The front arms 116 are interconnected intermediate their ends and across the baler by a common torque tube 126, while the rear arms 118 are similarly interconnected by a torque tube 127. Tubes 126, 127 are journalled by the sidewalls 18 so as to adapt the arms 116 and 118 for fore-and-aft swinging movement about the axes of tubes 126, 127.

The tensioning mechanism 114 further includes a pair of take-up rollers 128 and 130 spanning the baler and are rotatably mounted at their opposite ends to the lower ends of the front and rear take-up arms 116 and 118. The front and rear take-up rollers 128 and 130 are back wrapped, as are the front and rear idler rollers 96 and 100, by the respective front and rear sets of belts 24 and 26 so as to "store" extra lengths of the belts when needed for expansion of the bale forming chamber 88. When the take-up arms 116 and 118 are pivoted counterclockwise and clockwise respectively (viewing Fig. 2), the extra lengths of belts 24 and 26 are paid out to permit chamber expansion, whereas when they pivot in the opposite rotational senses, belt length is stored between the rollers 96, 128 and 100, 130 so as to permit starting of the chamber 88 at its initial contracted size.

The hydraulic actuators 120 extend between and are coupled to the upper ends of the front and rear take-up arms 116 and 118 along the exterior of the opposite sidewalls 18. In such manner, upon extension or contraction of the actuators 120 the front arms 116 and rear arms 118 are concurrently pivoted the same amount although in opposite directions. Thus, the same amount of belt length is paid out or stored in the front belts as in the rear belts.

The two positioning control mechanisms 28, 30 are powered by a drive train 122 disposed along the right frame side wall 18 as seen in Fig. 3. The drive train 122 includes a pair of large, front and rear driven sprockets 132 and 134 secured to front and rear shafts 52 and 54 respectively which extend outwardly from the right sidewall 18. A drive transmitting, endless chain 136 back wraps and crosses over an imaginary line connecting the rotational axes of the sprockets 132 and 134 so as to drive the sprockets in opposite rotational directions indicated by the arrows in Fig. 3. The drive chain 136 is also entrained about a pair of idlers 138 and 140 rotatably mounted to the right sidewall 18 forwardly of the front sprocket 132. The idlers route the drive chain 136 clear of the front sprocket 132 for entrainment about a lower sprocket that inputs motion to chain 136. Sprocket 141, in turn, is fixed for rotation with another, larger sprocket 142 driven by an endless chain 143 entraining a smaller, forwardly located sprocket 144 fixed on the output shaft 145 of a source of rotary power, such as a hydraulic motor 146 (Figs. 3, 7, 8, and 9).

The source of motive power for the pickup 108 and the belt drive rollers 102, 104 is the power take-off shaft of the towing tractor from which rotational motion is transmitted by telescoping shafts (not shown) to the input shaft 147 of a right angle gear box 148 on the front part of the baler.

From an output shaft 149 (Fig. 1) of the gear box 148, rotational motion is transmitted to a large sheave 150 (Fig. 2) through a shaft 152 and to a sprocket (not shown) behind the sheave 150 secured to the same drive shaft 152 as the sheave 150. An endless chain 154 transmits rotation from the sprocket on shaft 152 to a sprocket 156 on one end of the front drive roller 102 and from the front drive roller 102 to the rear drive roller 104 via another chain 158 entrained about a pair of sprockets 160 and 161 attached to the respective rollers. In such manner, the rollers 102 and 104 and thereby the front and rear sets of belts 24 and 26 are driven in the same clockwise sense viewing Fig. 1 which causes their adjacent stretches 84 and 86 to move in opposite generally vertical directions, the rear stretch 84 moving upwardly and the front stretch 86 moving downwardly. Further, another endless chain 162 entrains a sprocket 164 on the pickup 108 for rotating its tines in the direction of the arrow seen in Fig. 1. As viewed in Fig. 3, a sprocket 166 on the right side of the front drive roller 102 and a sprocket 168 on an end of the bale chamber roller 112 are entrained by a chain 170 for driving the roller 112 from the drive roller 102.

A belt 172 (Fig. 2) transmits rotation from the sheave 150 on shaft 152 to a smaller sheave 174 on the input shaft 176 of a hydraulic pump 178. The pump 178 is hydraulically connected to the hydraulic actuators 120 for the take-up arms 116, 118 and to the hydraulic motor 146 for the control mechanisms 28 and 30.

Operation

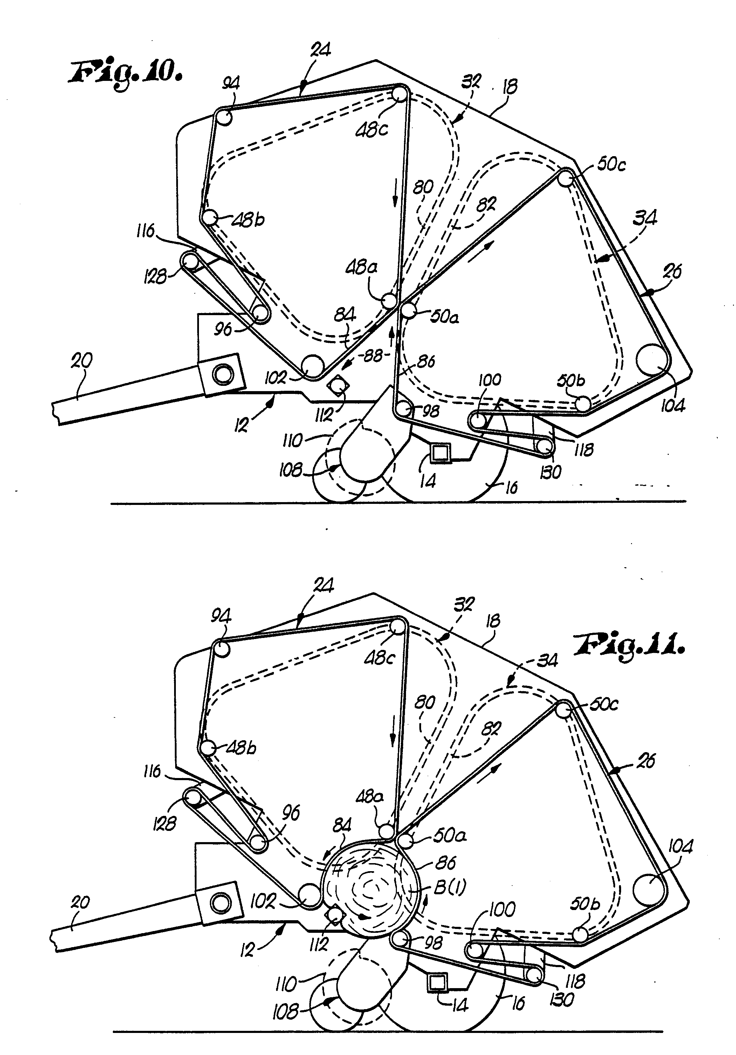

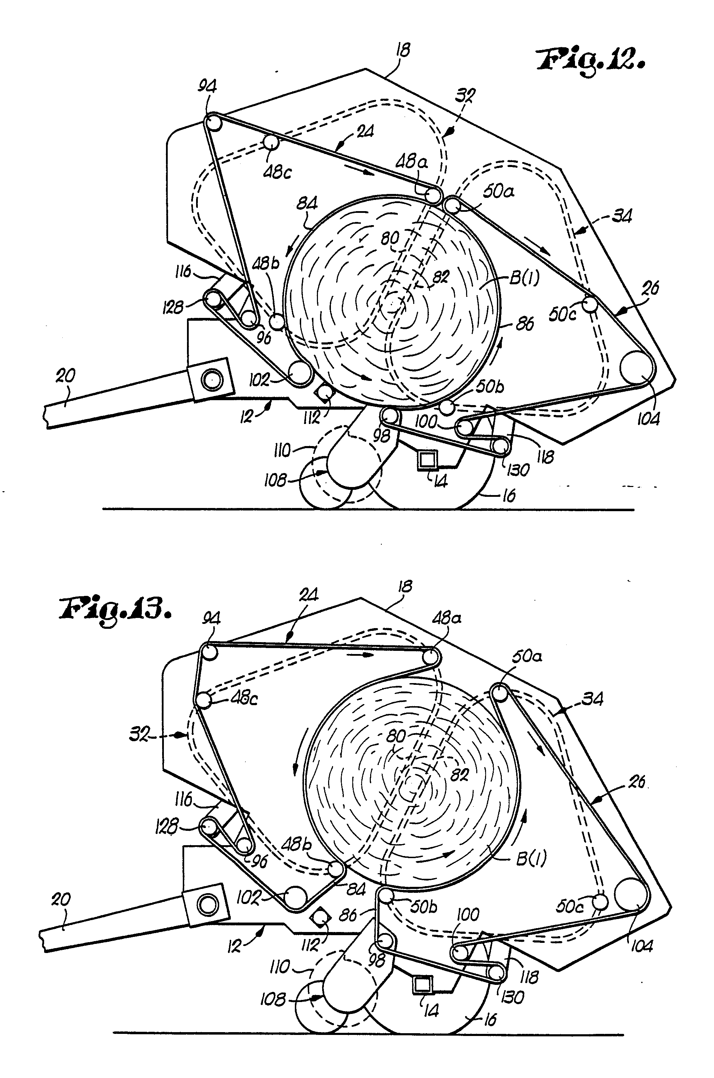

The operation of the continuous baler is illustrated schematically in Figs. 10-16.. As the baler moves across the field in the "empty" condition of Fig. 10, the pickup 108 continuously lifts windrowed materials off the ground and introduces them into the baling chamber 88 through the bottom, open throat entrance thereof. Such materials are acted upon by the countermoving belt stretches 84 and 86 to cause the material to tumble forwardly within chamber 88 and progressively coil up into a larger and larger bale as illustrated in Fig. 11. The positioning rollers 48a and 50a resist upward movement at this time to provide yieldable down pressure against the forming bale, but as the bale continues to grow and exert sufficient upwardly directed force against the rollers 48a, 50a, the latter shift upwardly as illustrated in Fig. 12.

By the time the bale B(1) reaches the diameter illustrated in Fig. 12, it is full size. Consequently, at that time a strand of binding twine or the like may be introduced from an overhead bale wrapper unit 182 (Fig. 1) down to the rotating bale B(1) to be entrained by the latter, which causes the twine to start wrapping around the rotating bale.

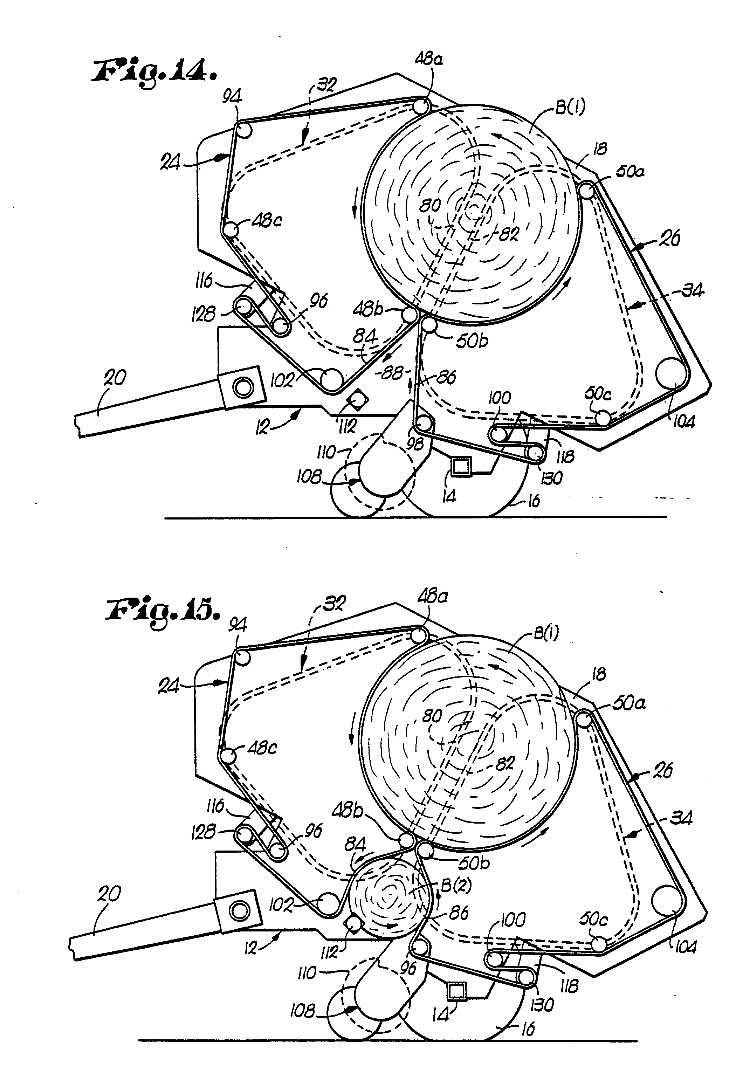

Essentially simultaneously with commencement of bale wrapping, power is supplied to the positioning chains 32 and 34 to cause the next positioning rollers 48b, 50b to start moving under the bale B(1) and lifting the bale B(1) toward a raised position, such action being illustrated in Fig. 13. Ultimately, the positioning rollers 48b, 50b come together and move a short distance up along their upward course of travel as illustrated in Fig. 14, at which point the rollers 48b, 50b momentarily pause.

The bale B(1) continues to rotate in the Fig. 14 position so that the binding cycle may be completed. Likewise, it has continued to rotate all the while that the rollers 48b, 50b have raised the bale B(1) from the lower position of Fig. 12 to the higher position of Fig. 14.

Simultaneously, new crop material has continued to enter the baler via the pickup 108 as the baler has continued moving non-stop across the field. Such new material has been introduced during this time into a new baling chamber formed beneath the rising bale B(1) and confined at the top by rollers 48b, 50b as illustrated in the transition from Fig. 13 to Fig. 14. As the two rollers 48b, 50b come together in the Fig. 14 position, they effectively close off the upper end of the new baling chamber 88 and cause material which might otherwise flow up to the bale B(1) to instead turn down along the front belt stretch 84 and start coiling into a new bale B(2) as illustrated in Fig. 15.

As the new bale B(2) begins to form as illustrated in Fig. 15, the rollers 48b, 50b resist upward movement, but such resistance is overcome as the bale B(2) continues to enlarge. Consequently, as bale B(2) continues to grow, it also pushes the overhead bale B(1) further upwardly. This movement also has the effect of separating the rollers 48a and 50a so that, by the time the baler reaches the condition of things illustrated in Fig. 16, the bale B(1) is fully released by the belts and can gravitate down a rearwardly inclined ramp defined by rollers 50a, 50b and the upper stretch of the rear belts.

Thereafter, formation of the bale B(2) continues until such time as it reaches the full size condition of Fig. 12, whereupon the cycle is repeated.

It is to be noted that, depending upon the type of binding material used for the bales, the wrapping cycle may or may not start while the bale is still in the main baling chamber. With twine as the wrapping medium, and in order to maintain the integrity of the bale during such time as it is subjected to squeezing and lifting stresses by the positioning rollers, it has been found desirable to start the binding cycle while the bale is still in its initial, lowered position.

Hydraulic Control Circuit

Figs. 8 and 9 schematically illustrate a suggested hydraulic circuit for controlling the tensioning cylinders 120 and the hydraulic motor 146. During mere forming of a bale, it is necessary for the hydraulic circuit to apply compactive pressure through the cylindrs 120, and it is desirable that such pressure be constant throughout the forming process. Fig. 8 illustrates the condition of things in the circuit during what will hereinafter be referred to as the "forming mode" of the circuit.

On the other hand, when a finished bale is being lifted to the bale wrapping position, it is necessary for the control circuit to apply lifting force to the next two positioning rollers 48, 50, while at the same time applying the same tension to the forming belts as before. In Fig. 9, the condition of things therein illustrated has been denoted as the "lifting mode".

The variable displacement pump 178 is mechanically linked to a control cam (not shown) secured to the shaft 52 associated with the front sprocket 36. Thus, the rotative position of the sprocket 36 determines the rotative position of the control cam, and hence also the position of the swash plate within the pump 178. This is significant because, depending upon the position of the swash plate, high pressure oil will be pumped by the pump 178 either along circuit path A-A or B-B toward the motor 146.

In the forming mode, high pressure oil is introduced by the pump 178 into circuit path B-B, as indicated by the two gauges G1 and G2. However, the motor 146 cannot be driven by the pressurized oil in path B-B because a check valve 180 adjacent to motor 146 in path A-A blocks the discharge of oil from motor 146 into path A-A. Accordingly, the high pressure oil in path B-B flows through a pilot-operated relief valve 181 to path A-A and returns to the pump 178. As indicated by gauges G3 and G4 in path A-A, the pressure level in path A-A at this time is relatively low.

It will be remembered, however, that even though the motor 146 is not to be driven hydraulically during the forming mode, it is important that the motor 146 be capable of "mechanical" rotation by the bale growing within the chamber 88. In this respect, since the bale continues to grow, it will push upwardly on the overhead rollers 48, 50, causing the chains 80, 82 to be moved, which in turn rotates the output shaft of the motor 146. Oil which is displaced by motor 146 during such rotation by the growing bale simply moves reversely in path B-B and over to path A-A via the relief valve 181.

It is important, of course, that belt tension be constantly applied to the forming bale when the circuit is in the forming mode, and this is accomplished by continuing to pressurize the cylinders 120 even though the motor 146 is not hydraulically driven at this time. In this respect, when the path B-B is subjected to high pressure oil by the pump 178, pressurized oil also flows through a check valve 182, thence through a pressure-reducing valve 183, and finally to the cylinders 120 via a pilot-operated check valve 184. As illustrated by the gauge G5 slightly upstream from the pilot-operated check valve 184, the pressure on the downstream side of the reducing valve 183 is something less than that in path B-B when the latter is fully pressurized. The reducing valve 183 actually serves to prevent the pressure seen by the cylinders 120 from exceeding a certain predetermined amount, regardless of the pressure level which may be reached in paths A-A or B-B. This can be important during discharge of a bale when, because of a change in belt length, the cylinder 120 may be caused to extend to take up belt slack, yet it is necessary that the actual pressure in the system and thus the force applied by the belts to the bale forming in chamber 88 not exceed the chosen level. Valve 183 has the ability to maintain the selected pressure level under those circumstances.

When the rollers 48a, 50a have been moved upwardly by the growing bale to such an extent that the bale is now full sized, the cam on shaft 52 will likewise have been rotated to such a position that it shifts the swash plate within the pump 178 into position for starting the lifting mode of the hydraulic circuit as illustrated in Fig. 9. When the swash plate is thus shifted, the pump 178 introduces high pressure oil into path A-A of the circuit, as indicated by the gauges G3 and G4 in Fig. 9. This time, the oil attempting to enter the motor 146 is permitted such entrance by the check valve 180, and consequently, the motor is driven in such a manner as to power the next positioning rollers 48b, 50b into position underneath the finished bale and up along the course of travel of such rollers to raise the bale toward the tying location.

Note during this operation of the motor 146 that high pressure oil in circuit path A-A continues to be presented to the pressure-reducing valve 183 through a check valve 185 in one of the lines bridging the two circuit paths A-A and B-B. Oil is prevented from short circuiting to the circuit path B-B at this time, however, because of the other check valve 182. Consequently, even throughout operation of the motor 146 to raise the finished bale, tension is maintained on the belts by the cylinders 120 since oil continues to be presented therethrough through the pressure-reducing valve 183 and the pilot-operated check valve 184. It is to be noted, however, that the pressure seen by the cylinders 120 is something less than that experienced in circuit path A-A, as illustrated by gauge G5 when compared to gauges G3 and G4. A pilot operated, pressure-relief valve 186 may be provided between the circuit paths A-A and B-B for the purpose of providing a safety relief for circuit A-A in the event that, for some unexpected reason, the motor 146 is jammed or otherwise prevented from rotating when circuit A-A is subject to high pressure.

Optional Flow-Separating Fork

Figs. 17-21 are directed to additional structure which may be helpful in certain conditions to prevent freshly entering crop materials from tending to flow up to and become a part of the bale B(1) after such bale is raised from its normal lowered position and continues to rotate both during such initial raising and continued elevation and rotation during application of the wrapper. While the positioning rollers 48, 50 are operable to close together and form the top of the baling chamber 88 as they start upward along the center of the machine, there is still a tendency for materials to feed up between the rollers 48, 50 at this time, particularly in view of the inherent self-feeding action of the bale B(1) as it rotates counterclockwise and forms a feeding nip area at the point of its engagement with the roller 50.

The separating fork is denoted broadly by the numeral 186 and is normally maintained in its stored or standby position of Fig. 18 wherein the fork 186 lies in a generally fore-and-aft attitude below and behind the baling chamber 88. The fork 186 includes a pair of arms 188 (only one being shown) situated on opposite inboard sides of the baler and fixed at inner ends to a shaft 190 spanning the baler and journalled at opposite ends by the sidewalls 18. At their outer ends, the arms 188 are provided with a cross shaft 192 which interconnects such opposite ends and forms a transverse pivot for the head 194 of the fork having a plurality of laterally spaced tines 196 which are aligned with the spaces between the rear set of belts 86 so as to be able to project for wardly through such spaces and between the belts during operation as hereinafter explained. A pair of cranks 198 (only one being shown) at opposite lateral ends of the head 194 are rigidly affixed thereto and project normally rearwardly therefrom to respective, pivotal connections 200 with spring-loaded, telescoping links 202 which are pivoted at their opposite ends to the corresponding sidewall 18 by pivots 204. Each of the telescoping links 202 includes a central rod 206 and an external sleeve 208 that can slidably reciprocate on the rod 206, there being a compression spring 210 coiled around the rod 206 between the lower end of the sleeve 208 and the pivot 204. Thus, each sleeve 208 is yieldably biased away from the pivot 204 to the extent permitted by an internal limit (not shown) to cause the link 202 to assume a maximum length condition illustrated in Figs. 18, 19, and 20.

The fork 186 is operated by control apparatus broadly denoted by the numeral 212 illustrated in Fig. 17 on the left side of the baler. In this respect the shaft 190 upon which the arms 188 of fork 186 are mounted projects through the right side wall 18 of the baler and is rigidly secured to a suitable sprocket 214 for rotation of the sprocket 214 and shaft 190 as a unit.

Rotation of the sprocket 214 is, in turn, caused and controlled by remaining components of the apparatus 212 including a cam 216, cam follower lever 218, drive chain 220, and tension spring 222. The lever 218 has a pivotal connection 224 at its upper end with the sidewall 18 and is provided intermediate its opposite ends with a follower roller 226 that rides on the periphery of the cam 216. The chain 220 attached to the lower end of the lever 218 extends forwardly therefrom and wraps around the sprocket 214 for almost 360° of wrap, whereupon it connects at its opposite end with the tension spring 222 such that the follower roller 226 of lever 218 is constantly biased into engagement with the periphery of cam 216.

The cam 216 is fixed to the stub shaft 54 associated with the lower rear sprocket wheel 42 of positioning apparatus 30 such that cam 216 rotates with the sprocket 42 and is timed with the positioning mechanism 30. Much of the periphery of the cam 216 is concentric with the axis of shaft 54 such that there is no swinging movement of the lever 218 about pivot 224 and hence no movement of the fork 186 out of its stored position of Fig. 18. The stored position of the fork 186 in Fig. 18 corresponds to the condition of the cam 216 and position of the lever 218 as shown in Fig. 17. The operating link 202 of the fork 186 causes the head 194 thereof to be folded down into a retracted position at this time.

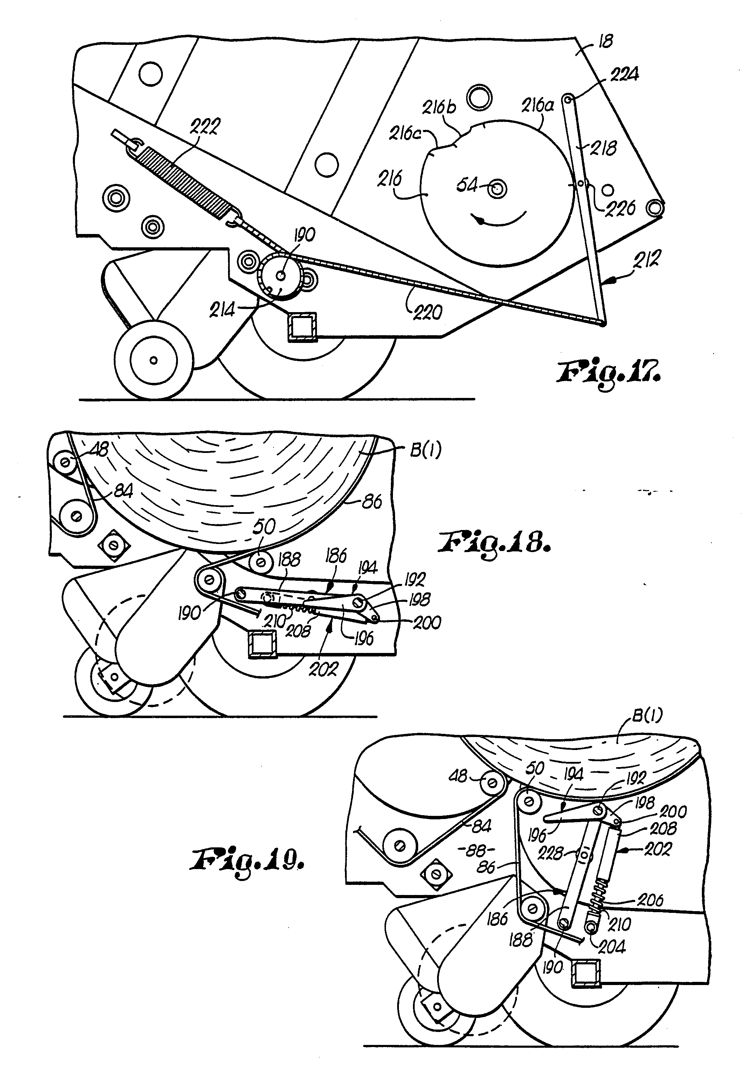

As the bale B(1) is lifted by the positioning rollers 48 and 50, caused by operation of the positioning mechanisms 28 and 30, the cam 216 is caused to rotate in a clockwise direction viewing Fig. 17 such that a peripheral segment 216a becomes presented to the lever 218. Because the segment 216a is of a progressively decreasing radius, the lever 218 is allowed to swing in a clockwise direction under the influence of the tension spring 222, causing the sprocket 214 to be rotated in a counterclockwise direction and thereby swing the fork 186 upwardly out of its stored position as illustrated in Fig. 19. Because the operating link 202 is at its full extension at this time, such swinging of the fork 186 causes the head 194 thereof to flip out in a clockwise direction from its folded or retracted position of Fig. 18.

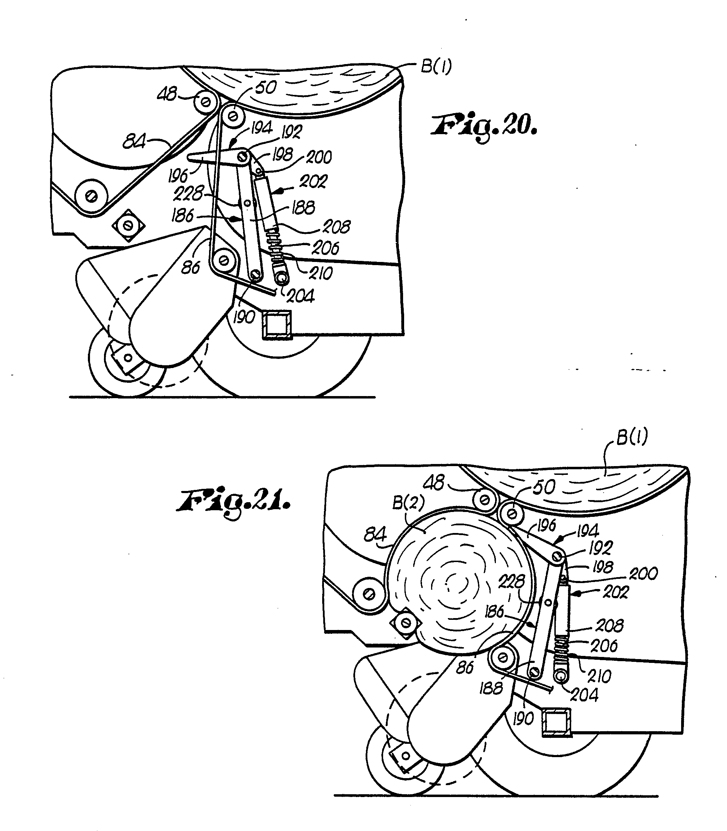

As the bale B(1) continues to rise within the baler, the fork 186 continues to swing toward the chamber 88 until the positioning rollers 48, 50 come together and close off the top of the new baling chamber 88 as shown in Fig. 20. By this time, a second peripheral segment 216b of cam 216 will have come under the follower 226 of lever 218, and because segment 216b is an abruptly radially reduced segment, the fork 186 will have moved ahead quickly into its operating position of Fig. 20 wherein the tines 196 project into and substantially across the chamber 88 a short distance below the rollers 48, 50. Such abrupt movement of the tines 196 into the chamber 188 has the effect of cutting through any flowing stream of material tending to move up between rollers 48, 50 to the overhead bale B(1) and to deflect such separated stream downwardly and forwardly toward the front of the chamber 88. Formation of the new bale core B(2) then commences within the chamber 88, and as the bale core B(2) grows, it bears against the tines 196 to deflect the same in a clockwise direction, compressing the springs 206 of telescoping links 202.

As the bale core B(2) grows even further, raising the rollers 48, 50, such movement of rollers 48, 50 by bale B(2) has the effect of also rotating the cam 216 through mechanisms 28, 30, causing a third peripheral segment 216c of cam 216 to come under the roller 226 of lever 218. Segment 216c is a segment of rapidly increasing radius so that lever 218 is swung in a counterclockwise direction to likewise swing the fork 186 in a counterclockwise direction away from the bale B(2) and back down toward, and utlimately to, its stored position of Fig. 18. Rollers 228 on the arms 188 of fork 186 are disposed for riding engagement with the bale B(2) as the latter grows and the fork 186 is raised up into its operating position such that growth of the bale will also have a tendency to swing the fork 186 back out of the chamber 88 when presence of the fork 186 is no longer needed.

It is thought that the present invention and many of its attendant advantages will be understood from the foregoing description and it will be apparent that various changes may be made in the form, construction and arrangement of the parts thereof without departing from the spirit and scope of the invention or sacrificing all of its material advantages, the form hereinbefore described being merely a preferred or exemplary embodiment thereof.

## Claims

1. In a round baler having means for feeding crop materials into the baler as the baler moves across a field, the improvement comprising:
means defining an expandable bale forming chamber for receiving materials from the feeding means and rolling the materials into a fully formed bale within the chamber;
a bale wrapping station separate from said chamber;
means for transferring a fully formed bale from said forming chamber to said wrapping station as the baler continues said movement and the feeding means continues to feed materials into the baler;
means for applying a wrapper to the bale at said wrapping station as the baler continues said movement and the feeding means continues to feed materials into the baler; and
means for discharging a wrapped bale from the baler as the baler continues said movement and the feeding means continues to feed materials into the baler.

2. In a round baler as claimed in Claim 1, wherein said chamber defining means is operable to define a new bale forming chamber for receiving incoming materials while the previous bale is being wrapped at said wrapping station.

3. In a round baler as claimed in Claim 1, wherein said chamber defining means includes a pair of opposed, oppositely moving, initially generally upright web stretches, said transferring means and said chamber defining means further includes shiftable transverse guide rollers engageable with said web stretches and with the bales formed and transferred in the baler to present a succession of baling chambers which enlarge to accommodate each growing bale, open at the top and dissipate as a finished bale is lifted by certain of the rollers to the wrapping station, and form again beneath the overhead bale to start the next successive bale in the baler.

4. In a round baler as claimed in Claim 1, wherein said certain rollers which lift a finished bale to the wrapping station progressively rise as the next bale enlarges therebeneath, said discharging means including further rollers engageable with the web stretches for cooperating with the certain lifting rollers to define a gravitational discharge ramp from an elevated position in the baler for the wrapped bale.

5. In a round baler capable of discharging a completed bale without stopping advancement of the baler across a field and pickup of crop materials therefrom, the improvement comprising:
means for confining incoming materials in a lower portion of the baler and forming such materials into a round bale;
means for raising the bale up out of said lower portion of the baler upon completion of the bale;
means for confining incoming materials in said lower portion of the baler as the previous completed bale is being raised out of said lower portion; and
means for discharging the raised bale from the baler while the baler continues to advance.

6. In a round baler as claimed in Claim 5; and means for applying a wrapper to each raised bale before it is discharged from the baler.

7. In a round baler as claimed in Claim 5; and means for starting the application of a wrapper to the bale when it reaches full size and while it is in said lower portion of the baler, continuing said application of the wrapper as the bale is being raised toward an upper portion of the baler, and completing the application of the wrapper while the raised bale is in said upper portion of the baler.

8. In a round baler as claimed in Claim 5, wherein said means for confining incoming materials in the lower portion of the baler includes apparatus temporarily movable across the bottom of the raised bale in a direction transverse to the flow of any material tending to move toward the raised bale for separating such material flow from the raised bale and deflecting the same back into the lower portion of the baler.

9. In a round baler having a baling chamber within which crop materials are formed into a crop bale, the improvement comprising:
means for expelling a bale upwardly out of the top of the chamber after the bale has reached a desired size; and
means for gravitationally discharging a bale from the baler after the bale has been expelled from the chamber.

10. In a round baler as claimed in Claim 9, wherein the baling chamber includes means for continuing the preparation of a next successive bale while the baler continues to advance across a field and as a previous bale is being discharged.

11. A continuous round baler including:
a pair of opposite sidewalls supported for movement across a field and disposed in laterally spaced apart relationship with respect to the normal direction of travel of the baler;
web means disposed within the space between said sidewalls;
guide rollers spanning the distance between said sidewalls and engaging the web means in a manner to present a pair of opposed stretches of which at least one is generally upright and between which bale forming may occur when the stretches are driven in mutually opposite directions;
power means for driving said web means in a manner to move said stretches in mutually opposite directions;
means for picking up crop materials from a field as the baler is moved across the same and for introducing such materials into the entrance of a baling chamber formed between said stretches at a lower termination of the stretches,
said guide rollers having slack take-up means and web tensioning means associated therewith for yieldably permitting said chamber to enlarge as a bale progressively forms therein and deflects the stretches laterally and upwardly in order to accommodate the increasing size of the bale,
said guide rollers including pairs of cooperating, front and rear positioning rollers successively movable into operating engagement with said stretches and adapted for travel while confining said stretches therebetween in a generally upward direction along a predetermined course of travel beginning at a lower portion of the baler and terminating at an upper portion of the baler,

each pair of said positioning rollers during travel thereof along said course of travel comprising the top extremity of said baling chamber as the latter progressively increases in size during bale formation; and

mechanism operably coupled with said positioning rollers for successively presenting said cooperating pairs thereof to said course of travel adjacent the lower portion of the baler and for controlling each cooperating pair during its travel along the course of travel to the upper portion of the baler,

said mechanism being operable as each cooperating pair of positioning rollers is presented to the lower end of said course of travel and then moved a short distance upwardly along the same to cause the cooperating pair of positioning rollers to lift a finished bale upwardly along the course of travel to a raised position for subsequent discharge above a new baling chamber, the top of which is formed beneath the raised bale by the cooperating pair of positioning rollers,

said pickup and crop material introducing means being operable to continuously present picked up materials to the web stretches throughout non-stop movement of the baler across the field and continuous, successive, bale-forming cycles.

12. In a continuous round baler as claimed in Claim 11; and wrapping apparatus for applying a binding wrapper to each raised bale before the same is discharged from the baler.

13. In a continuous round baler as claimed in Claim 12, wherein said wrapping apparatus is operable to commence applying the wrapper to the bale before the bale is raised, to continue application of the wrapper during raising of the bale, and to complete application of the wrapper after the bale has been raised.

14. In a continuous round baler as claimed in Claim 11, wherein the rollers of each cooperating pair of positioning rollers separate adjacent the upper end of the course of travel in respective generally fore-and-aft directions to release the raised bale from confinement by the web stretches and permit the released bale to gravitationally discharge from the baler.

15. In a continuous round baler as claimed in Claim 11; and apparatus temporarily movable across said course of travel immediately following lifting of a bale to its raised position for separating inflowing material from the raised bale and confining such material to the new baling chamber formed beneath the raised bale.

16. In a continuous round baler as claimed in Claim 11, wherein said control mechanism includes a front, continuous loop, flexible drive element and a rear continuous loop, flexible drive element adjacent each of said sidewalls respectively, said positioning rollers including a first set of three equidistantly spaced rollers connected at opposite ends thereof to the front elements and a second set of three equidistantly spaced rollers connected at opposite ends thereof to the rear elements, the rollers being positioned on the elements at such locations and the elements being so timed relative to one another that by driving the elements lengthwise during a bale-forming cycle, the rollers of the front elements and the rollers of the rear elements are successively brought together to present said cooperating pairs of positioning rollers along said course of travel.

17. In a continuous round baler as claimed in Claim 16, wherein said control mechanism further includes a drive for said elements operable to supply lifting power to the cooperating pair of positioning rollers along said course of travel as a bale is raised and to supply yieldable retarding force to the cooperating pair of rollers along said course of travel after a bale has been raised and while a next bale is forming in said baling chamber.

18. In a continuous round baler as claimed in Claim 17, wherein said drive includes a rotary hydraulic motor having an output coupled with said elements, said motor having hydraulic circuit means coupled therewith for drivingly rotating the output of the motor when lifting power to said cooperating pair of positioning rollers is required and for resisting fluid displacement by the output of the motor when retarding force to the cooperating pair of rollers is required.

19. In a continuous round baler as claimed in Claim 11, wherein said web means comprises two separate sets of webs, including a front set and a rear set with one of said opposed stretches being associated with the front set of webs and the other of said opposed stretches being associated with the rear set of webs.

20. In a continuous round baler as claimed in Claim 19, wherein said webs include endless belts arranged in side-by-side relationship across the baler.

21. A continuous round baler including:
a pair of opposite sidewalls supported for movement across a field and disposed in laterally spaced apart relationship with respect to the normal direction of travel of the baler;
web means disposed within the space between said sidewalls;
guide rollers spanning the distance between said sidewalls and engaging the web means in a manner to present a pair of opposed stretches of which at least one is generally upright and between which bale forming may occur when the stretches are driven in mutually opposite directions;
power means for driving said web means in a manner to move said stretches in mutually opposite directions;

means for picking up crop materials from a field as the baler is moved across the same and for introducing such materials into then entrance of a baling chamber formed between said stretches at a lower termination of the stretches,

said guide rollers having slack take-up means and web tensioning means associated therewith for yieldably permitting said chamber to enlarge as a bale progressively forms therein and deflects the stretches laterally and upwardly in order to accommodate the increasing size of the bale,

said guide rollers including a positioning roller movable into operating engagement with one of said stretches and adapted for travel while in engagement with said one stretch in a generally upward direction along a predetermined course of travel beginning at a lower portion of the baler and terminating at an upper portion of the baler,

said positioning roller during travel thereof along said course of travel being located at the top extremity of said baling chamber as the latter progressively increases in size during bale formation; and

mechanism operably coupled with said positioning roller for repeatedly presenting the positioning roller to said course of travel adjacent the lower portion of the baler and for controlling the positioning roller during its travel along the course of travel to the upper portion of the baler,

said mechanism being operable as the positioning roller is presented to the lower end of said course of travel and then moved a short distance upwardly along the same to cause the positioning roller to lift a finished bale upwardly along the course of travel to a raised position for subsequent discharge above a new baling chamber, the top of which is formed beneath the raised bale at the positioning roller,

said pickup and crop material introducing means being operable to continuously present picked up materials to the web stretches throughout non-stop movement of the baler across the field and continuous, successive, bale-forming cycles.

22. In a continuous round baler as claimed in Claim 21, wherein said guide rollers further include a second positioning roller cooperable with said first-mentioned positioning roller to engage the web stretches and form the same into a baling chamber, to travel with said first-mentioned positioning roller along said predetermined course of travel, and to lift a finished bale during movement along said course of travel.

23. In a continuous round baling method, the steps of:

picking up crop materials from a field and introducing the materials into a baling chamber as the chamber advances across the field;

forming the picked-up materials into a round bale within the chamber while the advancement continues and until the formed bale reaches full size;

expelling the full-size bale from the chamber to a location adjacent the chamber and carrying the bale at said adjacent location while the chamber continues to advance and crop materials continue to be introduced into the chamber;

wrapping the bale at said adjacent location with a binding material while the next successive bale is forming in said baling chamber from crop materials continuing to be introduced into the chamber; and

discharging the wrapped bale from said adjacent location when the wrapping step has been completed and without stopping advancement of the chamber across the field, pick up and introduction of crop materials into the baling chamber, or formation of the next successive bale in the baling chamber.

24. In a continuous baling method as claimed in Claim 23, wherein each full-size bale is expelled upwardly from the baling chamber during said expelling step and said adjacent location is located above the baling chamber.

25. In a continuous baling method as claimed in Claim 24, wherein said discharging step includes discharging the wrapped bale gravitationally from said adjacent location without rendering the baling chamber inoperable for continuing to form the next successive bale.

26. In a continuous baling method as claimed in Claim 25, wherein said discharging step further includes forming a gravitational discharge ramp from said adjacent location for the wrapped bale.

27. In a continuous baling method as claimed in Claim 23 wherein said forming of the bale takes place between opposed, oppositely moving stretches of flexible webs which are spaced apart adjacent the lower extremities thereof to define a bottom entrance to the baling chamber and are converged together adjacent the upper extremities threof to define the top of the baling chamber, said expelling of the finished bale including the step of separating the stretches adjacent the top of the chamber after the bale has reached full size and raising the finished bale up through the open top of the chamber toward the adjacent location while a new chamber is simultaneously formed beneath the raised bale.

28. In a continuous baling method as claimed in Claim 23, wherein said forming of the bale takes place between opposed, oppositely moving stretches of flexible webs, at least one of which is disposed in a substantially upright orientation at the beginning of each bale formation in the baling chamber.

Fig.1.

0 255 559

*Fig.2.*

*Fig.3.*

Forming Mode

Fig.8.

Low High
$G_1$

Low
High $G_5$

Low High
$G_2$

178 B
A

182

184

186

181

146 B
A

185

183

180

Low High
$G_3$

Low High
$G_4$

120

Lifting Mode

Fig.9.

Low High
$G_1$

Low
High $G_5$

Low High
$G_2$

178 B
A

182

184

186

181

146 B
A

185

183

180

Low High
$G_3$

Low High
$G_4$

120

Fig.4.

179

18
66
24
66
18

48c

32
60
94

56
126
138

66
60
32

120
66
126
120

56
56
92

116
92
34
34
62
116

127
62
127

62
56
56
106
104
118

158
161
54

66
50b
66
130

16
100
16

16
14
26
108

50c

0 255 559

**Fig.16.**

**Fig.5.**

**Fig.7.**

**Fig.6.**

Fig.10.

Fig.11.

Fig.12.

Fig.13.

**Fig.14.**

**Fig.15.**

Fig.17.

Fig.18.

Fig.19.

**Fig.20.**

**Fig.21.**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 174 703 (MULTINORM B.V.)<br><br>* claims 1-13; figures 1, 2, 4, 5 * | 1-6,9-12,14,19-26,28 | A 01 F 15/00 |
| A | | 18 | |
| D,A | US-A-4 182 101 (M.V. GAEDDERT)<br>* figures 1, 2, 9 * | 1 | |

TECHNICAL FIELDS
SEARCHED (Int. Cl.4)

A 01 F 15/00

The present search report has been drawn up for all claims

| Place of search | Date of completion of the search | Examiner |
|---|---|---|
| BERLIN | 01-09-1987 | SAMWEL P.N. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82